# EUROPEAN PATENT APPLICATION

(11) **EP 1 292 179 A2**
(43) Date of publication of application: **12.03.2003**
(21) Application number: 02256158.3
(22) Date of filing: 05.09.2002
(51) Int. Cl.: H05K 13/00

(54) **A cable loom transportation system**

(30) Priority: 06.09.2001 GB 0121513; 27.04.2002 GB 0209679
(71) Applicant: DKR Electrical Services (Lancaster) Limited, Carnforth LA5 9EU (GB)
(72) Inventor: Kelly, John Anthony, Morecambe, Lancashire LA4 6DG (GB)
(74) Representative: Cardwell, Stuart Martin

(57) **Abstract**

A cable loom transportation system is described for transporting premade cable looms. The loom is formed into a plurality of loops. The system comprises a carrier having a ground engaging support structure and carrier/cable support means. In one embodiment the carrier/cable support means comprises a horizontal bar 35 from which the loops are hung utilising releasable strapping 52. The ground engaging support structure may be a tubular steel frame 30 or a cardboard box 23.

In another embodiment the carrier/cable support means comprises a plurality of platters 45 made of cardboard and each having a plurality of hinged tabs 47 formed as partial knockouts to which elasticated ties of the cable loom are attached. The platters are accommodated in a cardboard box in spaced apart relation.

## Description

The present invention relates to transportation for wiring looms, especially wiring looms for computer installations, but without limitation to same.
When wiring looms are built up at a location remote from their intended installation location, it is necessary to transport the made up looms to their installation location. In the case of long looms extending to many metres in length, such as is the case with looms for typical computer installations, it is advantageous if the looms are transported in a manner which does not take up an undue amount of space. Furthermore, it is also desirable that the loom can be removed from the transportation means in a way which allows the looms to be readily laid out with a tangle free play out. It is also important to avoid crushing of the cable insulation which could affect the conduction/impedance properties of the cables. Thus the cables cannot be simply laid on top of one another.

It is an aim of the present invention to provide a cable loom transportation system that addresses the above problems.

Accordingly the present invention provides a cable loom transportation system comprising a carrier/cable support means including a ground engaging support structure and wherein the cable loom is formed into a plurality of loops which in use, are hung from said cable support means for transportation purposes.

Means is provided for hanging a plurality of cable loops from said cable support means. One or more cable support means may be provided.

The cable support means may comprise a horizontal elongate member supported by or forming part of an A-frame. The A-frame may be formed by two frames of metal that pivotally interconnect along one side forming said horizontal elongate member. Means is provided for holding the A-frame in one or more positions.

In one embodiment the ground engaging support structure comprises a cardboard box and the cable support means comprises an elongate bar adapted for cooperating engagement with the support structure and disposed to span opposite portions of the support structure. Conveniently the box has four sides, a top and a bottom. Conveniently one of the sides has an access flap, defined by lines of perforation, which can be knocked out and through which the cable can be played out.

In another embodiment the cable support means comprises at least one platter, sleeve or tray having a generally planar body and having a plurality of tabs provided for supporting the loom by ties connecting therewith. More preferably, the platter is made of corrugated card and conveniently the tabs comprise partial knockouts. Preferably a plurality of platters are provided and are accommodated within a transportation carton comprising a cardboard box. Preferably means is provided for holding the platters in spaced relation. Conveniently said means comprises flap means formed integrally with the platters and folded to be disposed at 90° to the planar body of the platter. During transportation the platters are vertical and in this position the looms are supported by cooperation with the tabs. The aforedescribed knockouts of the platter are hinged along one edge (the lower edge when in the transportation orientation). When the looms are to be played out, the cartons are laid down to position the platters in a horizontal plane. Playing out of the loom is commenced at one end, and the loom slips off the tabs and the tabs hinge out of the way.

The present invention will now be described further, by way of example only, with reference to the accompanying drawings; in which:-
Figure 1 is a perspective view of a first embodiment of loom carrier.
Figure 2 and 3 are perspective views of second and third embodiments of loom carrier respectively,
Figure 4 is a perspective view of a fourth embodiment of loom carrier,
Figure 5 is a perspective view of a fifth embodiment of loom carrier in its transportation orientation, but with top removed for illustration purposes.
Figure 6, is a perspective view of a platter used in the embodiment of figure 5, and
Figure 7 is a perspective view of the embodiment of figure 5 in the course of loading the loom.

The various embodiments of loom transportation system described herein are described in relation to their application for transporting prefabricated looms of the type described and claimed in our co-pending British patent application no. 0121513.6 and derivatives thereof. Thus the transportation system is described in relation to a loom comprising a plurality of cables formed into a bundle at spaced intervals along its length by flexible cable ties, i.e. rubber bands and/or elasticated bands. Most usually the looms will be fitted with the required end connectors. Some of the embodiments of carriers described hereinafter are particularly suited to carrying looms of this type, as will be apparent hereinafter, but looms formed by other means can be accommodated with or without modification of the transportation system.

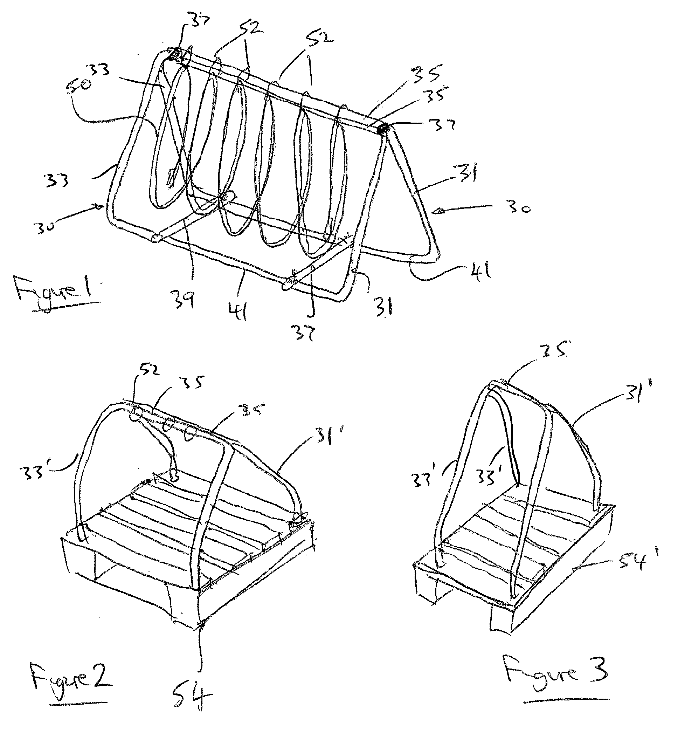

Referring firstly to figure 1, a carrier frame is illustrated and is conveniently referred to as an A-frame. It comprises a horizontal hanging element 35 which is supported off the ground by support elements 31. More particularly, tabular metal is formed into two frames 30 each having an elongate foot part 41, two upwardly extending support limbs 31, 33 and a rail element 35. The foot part and the rail element extend between the limbs 31, 33. The two rail elements are conveniently hingedly connected by a simple strapping means 37 allowing the two frames 30 to pivot relative to one another about an axis aligned with the rail elements. In use the rail elements form a hanging rail for the cable loom as described hereinafter. Link members 37, 39 are pivotally attached to a respective one of the feet 41 and connectible with a respective one of the other feet so as to hold the frames 30 in an A shape as illustrated in figure 1. In this position the cable loom can be loaded onto and removed from the carrier. Loading involves forming the cable loom 50 into loops as illustrated, and hanging each loop from the hanging rail. The hanging rail could be provided with purpose formed hooks to receive the loops but we prefer to hang the loops using strips of hook and loop fastener material 52. This locates the looms securely in place whilst allowing movement if desired and also spreads the load. We find that material of the order of 10-25mm wide is suitable. A less preferable alternative is to use plastic tie wraps. Another alternative is to use self adhesive insulation tape.

Once the looms have been loaded onto the frame, the link members 37, 39 can be released for one foot part allowing the frames to push closer together so that the frames take up less room during transportation.

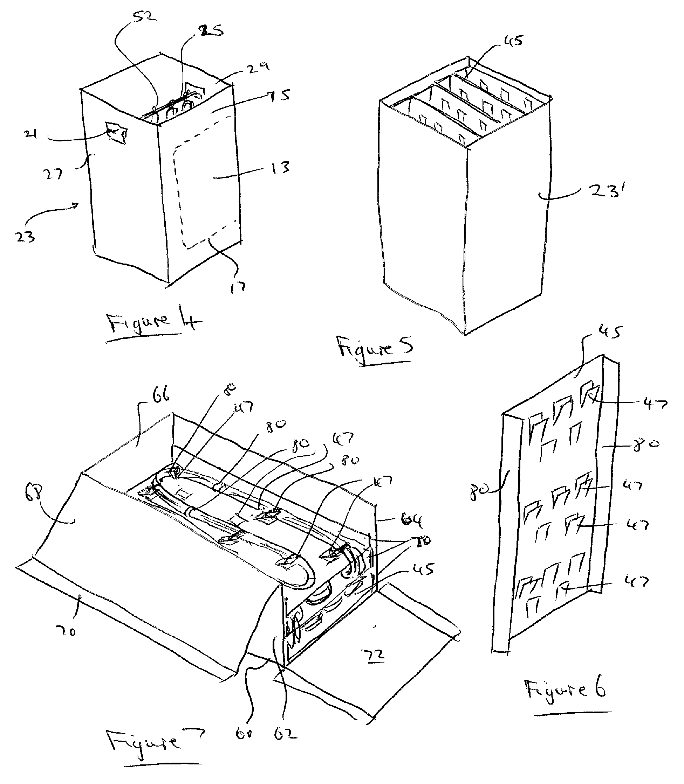

Figures 2 and 3 describe variations on the above carrier system. Corresponding parts use the same reference numbers and the foregoing description applies. Instead of the aforementioned foot part 41, the support limbs 31, 33, engage with a transportation pallet 54. These present an alternative to the aforementioned carrier when fork lift devices can be used to transport the frames into the unloading location. Figure 2 shows a full size pallet, whilst figure 3 shows a half pallet 54' which is used where access doors prevent the use of a full pallet. The size of the frame is reduced accordingly, but is otherwise of the same construction. Hook and loop material is preferred for hanging the loops of the loom from the hanging rail 35.

Referring now to figure 4, here there is illustrated a loom carrier that comprises a container 23 incorporating a hanging rail 25. The container comprises a six sided box made of cardboard and the hanging rail spans two opposite side walls 27, 29. The rail may hang from a top edge of the side walls 27, 29, or be received in an aperture provided by a partial knock out tab 21 hinged along a lower edge thereof to provide a wall reinforcement when folded down. The elongate bar conveniently comprises a length of tubular metal with hook formations at each end to engage with the side walls of the box.

In use the box is partially formed and placed in the upright orientation to allow loops of cable to be hung from the hanging rail 25. Again hook and loop material 52 is the preferred means of hanging the loops from the hanging rail, but other methods mentioned above may be utilised. Once the loom is in place, the container is sealed closed. The use of an enclosed container is advantageous as it keeps dust and dirt off the cables if they have to be stored for a long time between manufacture and installation.

Another feature of the container is the provision of an access panel 13 in one wall 15 of the box. The access panel is conveniently formed as a full or partial knock out panel defined by perforations 17 along at least three sides. Once opened, the loom can be played out through the access panel in a tangle free manner by releasing the means holding each loop of the loom on to the hanging rail.

Figures 5, 6 and 7 show yet another embodiment of loom carrier. In this embodiment, a container is used in the form of a cardboard box 23', but the hanging rail 25 is replaced by a plurality of support elements which are conveniently referred to as platters 45, and comprise sheets of cardboard that have a plurality of partial knock out tabs 47 disposed at discrete locations over the surface of the platter.

The cardboard used for the container and the platters as described herein, is conveniently a laminated construction comprising of at least one layer of corrugated card interposed between two planar facing layers, as is commonly used in the construction of cardboard boxes. Additional layers may be used where more strength is required. The tabs 47 are provided to support the loom at a plurality of locations when the platters are in an upright orientation.

Cooperation of the loom with the tabs 47 is easily achieved where the cables of the loom are bound together at spaced intervals using the aforementioned elasticated tie wraps. Thus the tie wraps 80 are simply stretched to hook them on to a tab.

Installation of the looms within the respective platters is preferably done with the platters in a horizontal orientation, and preferably prior to final fabrication of the container in which the plurality of platters are received.

The following description in conjunction with a review of Figure 7 will serve to explain how installation into the container is carried out. The container is partially erected. One side 60 lies on the floor and two of the adjacent sides are folded to be disposed substantially vertically. The bottom 66 is folded up and secured to the two upright sides to hold them in the illustrated position. The remaining side 68 and its closure flap 70 is folded to one side as illustrated. A first platter 45 is placed in the body of the container and the loom 15 introduced in loops. At periodic intervals the elasticated tie wraps 80 are engaged with a convenient one of the plurality of tabs. A typical box is of the order of 1.5m tall. It is convenient if the tabs are disposed in three spaced groups i.e. adjacent the top, middle and lower quarter of the box height. Connections will be made as appropriate with tabs at these locations, selecting those that align with the location of the tie wraps. Thus not all the tabs will be used. As is seen more particularly in figure 6, the preferred platter has three groups of tabs 47, each group comprising alternate staggered rows of tabs. It is preferred to have five tabs across the width of the platter. The opposite longitudinal edges of the platter have respective flaps 70 hingedly connected thereto. The purpose of the flaps will be apparent from the following description.

Once the first platter has the loops of loom attached to it, another platter is placed in position. This platter is supported at its edges on the flaps 70 of the preceding platter. This platter is loaded with loops of loom in the same way, and the process repeated for successive platters, until the container is full. Usually, the container is dimensioned to accommodate four platters. Thereafter the side wall 68 is folded over and the top 72 folded up and secured in place. The container can then be upended to position it in its vertical orientation for transportation and/or storage until the cable is required to be installed. Playing out of the cable loom is straight forward and involves laying the container down, opening the top of the container, and pulling out the loom by one of its ends i.e. the last end to be installed into the container. As the loom is pulled out the elasticated wraps slip 80 off the tabs 47 to which they are attached and the tabs hinge out of the way. The length of the tabs is greater than the depth of the flaps 70 and accordingly this ensures that the tabs support the loom and are not bent past the 90° position when supporting the loom.

The aforedescribed embodiment may be used with cable looms that are not tied with elasticated tie wraps, providing the ties used are themselves provided with means for making cooperating engagement with the aforementioned tabs. This could be achieved by ties having an associated loop or having an elasticated band wrap tied to the loom by said non-elastic tie wrap.

Other embodiments using non-elasticated tie wraps for bundling the cables could use the aforementioned transportation means by providing loops or hooks as part of the tie wraps or bound in by them which cooperate with the support means for the cable looms. The aforementioned tabs may incorporate or comprise apertures that receive said hooks.

## Claims

1. A cable loom transportation system comprising a carrier/cable support means 35 including a ground engaging support structure 31 and wherein the cable loom is formed into a plurality of loops which in use, are hung from said cable support means for transportation purposes.

2. A cable loom transportation system as claimed in claim 1 in which means 52 is provided for hanging a plurality of cable loops from said cable support means.

3. A cable loom transportation system as claimed in claim 1 or 2 in which a plurality of cable support means are provided.

4. A cable loom transportation system as claimed in claim 1, 2 or 3 in which the cable support means comprises a horizontal elongate member 35 supported by or forming part of an A-frame 30.

5. A cable loom transportation system as claimed in claim 4 in which the A-frame is formed by two frames of metal 30 that pivotally interconnect along one side forming said horizontal elongate member 35.

6. A cable loom transportation system as claimed in claim 5 in which means 37, 39 is provided for holding the A-frame in one or more positions.

7. A cable loom transportation system as claimed in claim 1, 2 or 3 in which the ground engaging support structure comprises a cardboard box 23 and the cable support means comprises an elongate bar 25 adapted for cooperating engagement with the support structure and disposed to span opposite portions of the support structure.

8. A cable loom transportation system as claimed in claim 7 in which the box has four sides, a top and a bottom and one of the sides has an access flap, defined by lines of perforation 17, which flap can be knocked out and through which the cable can be played out.

9. A cable loom transportation system as claimed in claim 1, 2 or 3 in which the support means comprises at least one platter 45, sleeve or tray having a generally planar body and having a plurality of tabs 47 provided for supporting the loom by ties connecting therewith.

10. A cable loom transportation system as claimed in claim 9 in which the platter is made of corrugated card and the tabs comprise partial knockouts.

11. A cable loom transportation system as claimed in claim 9 or 10 in which a plurality of platters are provided and are accommodated within a transportation carton comprising a cardboard box.

12. A cable loom transportation system as claimed in any one of claims 9, 10 or 11 in which means is provided for holding the platters in spaced relation.

13. A cable loom transportation system as claimed in claim 12 in which said means comprises flap means 80 formed integrally with the platters and folded to be disposed of 90° to the planar body of the platter.

14. A cable loom transportation system as claimed in claims 12 or 13 when appended to claim 10 in which the tabs are hingedly connected to the planar body and have a length that is greater than the distance that the plurality of platters are held spaced apart.
